# FASCICULE DE BREVET EUROPEEN

(11) **EP 2 344 385 B1**
(45) Date de publication et mention de la délivrance du brevet: **21.12.2016**
(21) Numéro de dépôt: 09737037.3
(22) Date de dépôt: 28.08.2009
(51) Int. Cl.: B64D 29/08

(54) **NACELLE POUR TURBOREACTEUR A CAPOT AMONT TRANSLATABLE**
STRAHLTRIEBWERKSGONDEL MIT STROMAUFWÄRTIGER VERSCHIEBBARER VERKLEIDUNG
TURBOJET ENGINE NACELLE WITH TRANSLATABLE UPSTREAM COWL

(30) Priorité: 13.11.2008 FR 0806318
(43) Date de publication de la demande: 20.07.2011
(73) Titulaire: Aircelle, 76700 Gonfreville l'Orcher (FR)
(72) Inventeur: JORET, Jean-Philipp, F-27210 Beuzeville (FR); VAUCHEL, Guy, F-76600 Le Havre (FR); GUILLOIS, Denis, F-91470 Limours (FR); BEILLIARD, Stéphane, F-31300 Toulouse (FR)
(74) Mandataire: Gaillarde, Frédéric F. Ch.
(86) Numéro de dépôt international: PCT/FR2009/001038
(87) Numéro de publication internationale: WO 2010/055216

(56) Documents cités:
- FR-A- 2 906 568
- FR-A- 2 914 363
- US-A- 5 035 379
- US-A- 5 609 313

## Description

La présente invention se rapporte à une nacelle pour turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section médiane de la nacelle.

Selon les conditions de température et d'humidité relative au sol ou en vol, du givre peut se déposer sur le profil de la lèvre, notamment au niveau du profil intérieur. Cette formation de givre peut être dangereuse pour le fonctionnement mécanique des parties fixes et tournantes du moteur et occasionner une diminution des performances. Des systèmes de dégivrage de cette partie de la lèvre d'entrée d'air ont donc été mis au point pour remédier à ce problème. On peut notamment citer les documents US 4 688 757 et EP 1 495 963 ainsi que la demande enregistrée sous le numéro FR 06/02547.

Actuellement, les opérations de maintenance sur ces équipements logés à l'intérieur de la structure d'entrée d'air obligent les constructeurs à prévoir des trappes d'accès à ces différents équipements. Malgré les efforts mis en oeuvre pour optimiser le positionnement des trappes et permettre un accès le plus facile possible, il est parfois nécessaire de visiter les équipements internes de la structure d'entrée d'air à l'aide d'outils spécifiques tel qu'un endoscope, ce qui ne donne pas entière satisfaction au niveau du contrôle de ces équipements.

Par ailleurs, en cas de besoin de remplacer une partie des équipements internes, il sera nécessaire de déposer la totalité de la structure d'entrée d'air, ce qui requiert un outillage important et entraîne une immobilisation de l'ensemble propulsif et donc généralement de l'avion.

On notera également que les conditions d'exploitation et de maintenance d'une entrée d'air obligent à avoir des composants distincts, comme une lèvre modulaire sectorisée ainsi qu'un panneau externe facilement démontable en raison de leur fort taux de remplacement du à leur exposition directe au milieu extérieur et à d'éventuels projectiles. Ces contraintes réduisent de manière importante l'intégrité de la ligne aérodynamique générale de la structure d'entrée d'air, ce que la présence de trappes d'accès vient encore aggraver.

Des solutions ont été présentées dans le document US 5 609 313 , qui est regardé comme l'art antérieur le plus proche, et la demande FR06/08599. Afin de pallier les inconvénients évoqués ces documents prévoient une nacelle de turboréacteur comprenant une structure d'entrée d'air translatable vers l'avant et découvrant ainsi au moins partiellement l'intérieur de la nacelle.

Ainsi, en intégrant la lèvre d'entrée d'air au panneau externe de manière à former une pièce unique démontable, un démontage et un remplacement partiel de la structure d'entrée d'air sont possibles et facilités. Par ailleurs, le démontage ainsi facilité permet également d'ouvrir la structure d'entrée d'air pour accéder à des équipements internes sans demander de manoeuvres importantes et compliquées ni requérir un temps d'immobilisation élevé.

Ces capots mobiles sont généralement montés sur un système rail / glissière comprenant une pluralité de rails répartis autour de la nacelle. La demande FR 07/09105 propose une installation de ces rails sur le carter de soufflante.

Toutefois, le nombre de moyen de guidage utilisé alourdit la nacelle et il existe donc un besoin pour une amélioration d'un tel système de capot mobile nécessitant moins de rails de guidage tout en conservant une bonne intégrité de la structure.

Par ailleurs, les structures de guidage décrites dans ces documents sont généralement moins adaptées pour des nacelles disposées au niveau du fuselage d'un aéronef et pour lesquelles le mât d'accrochage est sensiblement horizontal.

Afin de pallier les inconvénients précédemment mentionnés, la présente invention se rapporte à une nacelle pour turboréacteur telle que définie par les caractéristiques techniques de la revendication 1.

Ainsi, en prévoyant des moyens de guidage disposés au plus près d'une interface avec un mât d'accrochage, la reprise et la transmission des efforts au mât par les moyens de guidage sont grandement améliorées. Il s'ensuit qu'il est possible d'utiliser moins de moyens de guidage, ce qui allège l'ensemble de la nacelle. Par ailleurs, en cas d'éclatement d'une tuyauterie pneumatique, ou de surpression à l'intérieur de la nacelle, cette meilleure reprise d'éfforts permet de réduire grandement les déformées de structure dans un tel cas.

Avantageusement, l'interface du panneau externe mobile avec le mât d'accrochage comprend des moyens d'étanchéité. Ces moyens pourront être par exemple des joints longitudinaux.

Avantageusement encore, les moyens d'étanchéité sont disposés de manière à présenter une pente de dégagement de l'écrasement du joint lors des manoeuvres d'ouverture et de fermeture de la structure translatable.

Selon un premier mode de réalisation de l'invention, la nacelle comprend seulement deux moyens de guidage de type rail / glissière disposés de part et d'autre de l'interface avec le mât d'accrochage. Ces éléments étant disposés indifféremment sur la structure fixe ou la structure mobile et inversement.

Avantageusement, au moins un rail est équipé, au niveau d'une partie amont dudit rail, d'une bielle de renfort destinée à être liée au mât. En effet, la partie amont du moyen de guidage est en porte-à-faux par rapport à ses moyens de fixation, une bielle support permet donc un soutien optimal de cette partie amont.

Avantageusement encore, l'écartement entre au moins deux rails est maintenu à l'aide d'au moins une ferrure disposée entre lesdits rails et fixée dans chacun d'eux.

Préférentiellement, la structure mobile est équipée de moyens de centrage et de positionnement aptes à coopérer avec des moyens de centrage et de positionnement complémentaire d'une structure fixe.

Préférentiellement encore, les moyens de centrage et de positionnement comprennent au moins un limiteur de déformées comportant au moins une ferrure montée sur une structure fixe ou la structure mobile de manière à venir entre deux ferrures montées sur la structure mobile ou la structure fixe, un espace étant ménagé lorsque la structure mobile est en position fermée entre la ferrure montée sur la structure fixe (ou mobile) et les ferrures montées sur la structure mobile (ou fixe).

Ainsi, en position fermée, la ferrure montée sur la structure fixe (ou mobile) est écartée des ferrures montées sur la structure mobile (ou fixe), ce qui empêche la transmission d'efforts, tandis qu'en position ouverte, sous l'effet du vent, par exemple et de la déformée de la structure mobile, la ferrure fixée sur la structure fixe (ou mobile) vient en appui contre l'une ou l'autre des ferrures montées sur la structure mobile (ou fixe), ce qui permet une reprise d'effort et soulage l'ensemble des structures.

Avantageusement, le limiteur de déformées est disposés à l'opposé de l'interface de rattachement au mât.

De manière avantageusement complémentaire, les moyens de guidage sont associés à des moyens supplémentaires de reprise d'effort, tels que des pions de cisaillement, disposés à proximité de l'interface de la structure mobile avec le mât, et aptes à coopérer avec des moyens de reprise d'effort complémentaire d'un élément fixe, notamment ledit mât.

De tels moyens additionnels de reprise d'effort circonférentiel (pion de cisaillement) ajoutés dans une zone proche des moyens de guidage permettent d'aider lesdits moyens de guidage à supporter tout effort parasite en service. Des ferrures supportant des axes de reprise d'effort sont montée dans l'environnement des rails entourant le mât proche de l'ouverture du capot externe. Des ferrures réceptrices complémentaires sont montées en vis-à-vis sur la structure fixe de la nacelle ou du mât. Il est à noter que le ou les moyens additionnels peuvent indifféremment être montés sur la structure fixe ou la structure mobile et vice et versa.

De manière complémentaire, au moins une partie des moyens de guidage sont contenus dans une enveloppe longitudinale de la structure médiane.

De manière complémentaire encore, au moins une partie des moyens de guidage présentent un débordement aval des rails ou glissières au niveau d'une zone d'une section arrière de la nacelle.

Selon une variante de réalisation préférée, la nacelle est une nacelle pour fuselage d'aéronef.

Avantageusement, la nacelle est destinée à être fixée à un mât sensiblement horizontal.

La présente invention sera mieux comprise à la lumière de la description détaillée qui suit en regard du dessin annexé sur lequel :
- La figure 1 est une représentation schématique en perspective d'une nacelle selon l'invention.
- La figure 2 est une vue similaire à la figure 2 dans laquelle les rails sont disposés conformément à l'invention.

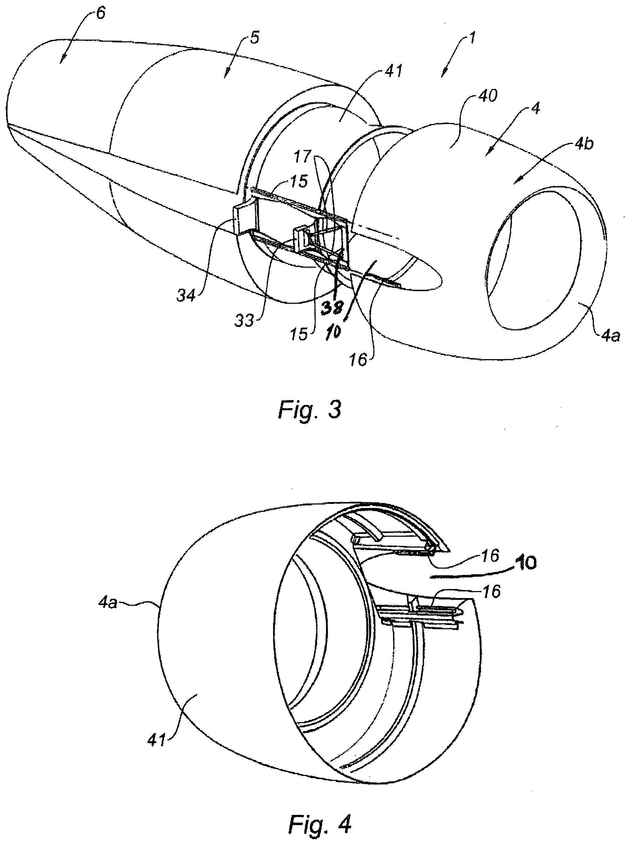

- La figure 3 est une vue de la nacelle de la figure 1 présentant une structure mobile en position ouverte.
- La figure 4 est une représentation de la structure mobile seule.
- La figure 5 est une vue en coupe de la nacelle de la figure 1 équipée d'un limiteur de déformées.

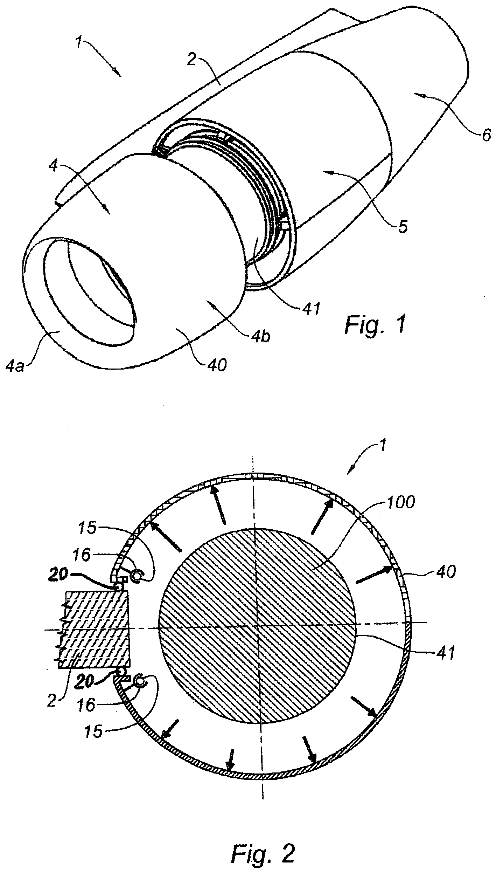

Une nacelle 1 selon l'invention, telle que représentée sur la figure 1 constitue un logement tubulaire pour un turboréacteur 100 dont elle sert à canaliser les flux d'air qu'il génère en définissant des lignes aérodynamiques internes et externes nécessaires à l'obtention de performances optimales.

Plus précisément, la nacelle représentée à la figure 1 est destinée à équiper un avion de type avion d'affaires ou touristique. Les ensembles propulsifs de tels avions sont généralement fixés au niveau de leur fuselage par le biais d'un mât 2 sensiblement horizontal.

De manière générale, la nacelle 1 possède une structure comprenant une section avant formant une entrée d'air 4, une section médiane 5 entourant une soufflante et un corps de compresseurs (non visibles) du turboréacteur, et une section arrière 6 pouvant abriter un système d'inversion de poussée.

L'entrée d'air 4 se divise en deux zones, à savoir, d'une part, une lèvre 4a d'entrée d'air adaptée pour permettre la captation optimale vers le turboréacteur 100 de l'air nécessaire à l'alimentation de la soufflante et des compresseurs internes du turboréacteur, et d'autre, part, une structure aval 4b, comprenant un panneau externe 40 et un panneau interne 41 et sur laquelle est rapportée la lèvre 4a.

Dans une nacelle 1 concernée par la présente invention, la lèvre 4a est intégrée au panneau externe 40 de manière à former une pièce unique mobile en translation. Le panneau interne étant quant à lui rattaché en amont d'un carter de soufflante.

Bien évidemment, la présente nacelle n'est pas limitée au mode de réalisation citée, la pièce unique translatable pouvant notamment s'étendre comprendre au moins une partie d'un panneau externe de la structure médiane 5, voire s'étendre jusqu'à la section arrière 6. Dans une autre variante, le panneau interne 41 pourrait être intégré à ladite structure translatable au lieu d'être fixe.

On notera que le panneau externe de la structure mobile présente une découpe 10 contournant le mât 2 lorsque ladite structure translatable est en position fermée et permettant d'accommoder une partie avant de ce mât. Cette découpe forme donc une interface avec le mât 2 et peut comprendre des joints 20 d'étanchéité périphériques.

L'interface du joint 20 avec le mât 2 est avantageusement réalisée avec une pente de dégagement de l'écrasement du joint lors de la manoeuvre d'ouverture et de fermeture de la structure du capot mobile.

La structure mobile est montée mobile en translation sur des moyens de guidage, à savoir deux systèmes rails 15 / glissières 16 disposés de part et d'autre du mât 2 au plus près de l'interface avec ledit mât 2.

Les rails 15 sont solidaires du mât 2, ou éventuellement du carter de soufflante, tandis que les glissières 16 sont solidaires de la structure mobile. Bien évidemment, la disposition inverse est possible.

Plus précisément, les rails 15 sont fixés au mât 2 par l'intermédiaire d'une ferrure aval 34 et d'une ferrure amont 33 destinées à être introduites et fixées dans le mât 2.

De cette manière, les systèmes rails 15 /glissière 16 permettent une meilleure reprise et transmission des efforts par le mât 2 et limite grandement les déformées de structure, notamment en cas de surpression interne due, par exemple, à l'éclatement d'une tuyauterie.

Par ailleurs, les deux rails 15 présentent une partie amont en porte à faux du mât 2 et donc non directement supportée par celui-ci.

Afin de remédier à ceci, et d'améliorer la tenue des rails 15 lorsque le capot mobile 4 est en position de maintenance, la partie amont non supportée de chaque rail 15 est reliée au mât 2 par une bielle 17 fixée dans la ferrure avant 33.

Par ailleurs, afin de maintenir l'écartement des rails 15 au niveau de ladite partie amont non supportée, les extrémités amont des rails 15 sont liées entre elles par une ferrure 38 maintenant le même écartement.

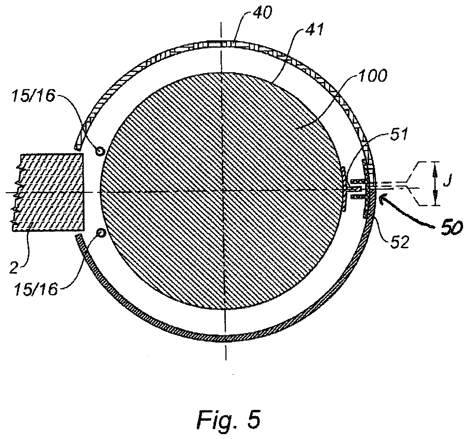

L'ensemble est complété par un limiteur de déformées 50 tel que représenté sur la figure 5.

Ce limiteur de déformées 50 est situé sensiblement à l'opposé du mât 2.

Il comprend une ferrure 51 simple fixée sur une structure fixe, à savoir le panneau interne 41, et une ferrure double 52 fixée dans la structure mobile translatable de manière à ce que la ferrure simple 51 vienne entre la ferrure double 52. Un jeu J est prévu, de manière à ce que la ferrure simple ne vienne pas en contact avec la ferrure double lorsque la structure translatable est en position fermée. Le montage inverse est de même possible à savoir la ferrure 51 montée sur la structure mobile du capot et la ferrure 52 montée sur la structure fixe.

Le limiteur de déformée 50 sert également de moyen de centrage.

En position ouverte, sous l'effet du vent ou autre, par exemple, la ferrure simple 51 vient alors en appui contre la ferrure double 52, ce qui permet une reprise d'efforts.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) pour turboréacteur comprenant une structure d'entrée d'air (4) apte à canaliser un flux d'air vers une soufflante du turboréacteur et une structure médiane (5) destinée à entourer ladite soufflante et à laquelle est rattachée la structure d'entrée d'air de manière à assurer une continuité aérodynamique, la structure médiane comprenant, d'une part, un carter destiné à entourer la soufflante et, d'autre part, une structure externe, la structure d'entrée d'air comprenant un panneau externe longitudinal (40) intégrant une lèvre d'entrée (4a) d'air et pouvant s'étendre jusqu'à intégrer au moins une partie de la structure externe de la section médiane et au-delà, ledit panneau externe longitudinal étant monté mobile en translation entre une position de fonctionnement dans laquelle le panneau externe assure la continuité aérodynamique de l'extérieur de la nacelle, et une position de maintenance dans laquelle le panneau externe est écarté de la structure externe de la section médiane et la lèvre d'entrée d'air est écartée du panneau interne de la structure d'entrée d'air, **caractérisée en ce que** le panneau externe longitudinal est associé à seulement deux moyens de guidage de type rail (15) / glissière (16), lesquels sont disposés de part et d'autre de l'interface avec le mât d'accrochage, les moyens de guidage de type rails (15) / glissière (16) étant structuraux, au moins une partie desdits moyens de guidage structuraux étant positionnés au plus près d'une interface avec un mât (2) d'accrochage de la nacelle, les deux rails (15) présentant une partie amont en porte à faux du mât (2) et donc non directement supportée par celui-ci, les extrémités amont desdits rails (15) étant liées entre elles par une ferrure (38) pour maintenir l'écartement entre les deux rails (15) au niveau de ladite partie amont.

2. Nacelle (1) selon la revendication 1, **caractérisée en ce que** l'interface du panneau externe mobile avec le mât (2) d'accrochage comprend des moyens d'étanchéité (20).

3. Nacelle (1) selon la revendication 2, **caractérisée en ce que** les moyens d'étanchéité (20) sont disposés de manière à présenter une pente de dégagement de l'écrasement du joint lors des manoeuvres d'ouverture et de fermeture de la structure translatable (40).

4. Nacelle (1) selon l'une quelconque des revendications 1 à 3, **caractérisée en ce qu'**au moins un rail (15) est équipé, au niveau d'une partie amont dudit rail, d'une bielle de renfort (17) destinée à être liée au mât (2).

5. Nacelle (1) selon l'une quelconque des revendications 1 à 4, **caractérisée en ce que** l'écartement entre au moins deux rails (15) est maintenu à l'aide d'au moins une ferrure (33, 34) disposée entre lesdits rails et fixée dans chacun d'eux.

6. Nacelle (1) selon l'une quelconques des revendications 1 à 5, **caractérisée en ce que** la structure mobile est équipée de moyens de centrage (52) et de positionnement aptes à coopérer avec des moyens de centrage et de positionnement complémentaires (51) d'une structure fixe.

7. Nacelle (1) selon la revendication 6, **caractérisée en ce que** les moyens de centrage et de positionnement (50) comprennent au moins un limiteur de déformées comportant au moins une ferrure montée sur une structure fixe (51) ou la structure mobile de manière à venir entre deux ferrures (52) montées sur la structure mobile ou la structure fixe, un espace étant ménagé lorsque la structure mobile est en position fermée entre la ferrure montée sur la structure fixe (ou mobile) et les ferrures montées sur la structure mobile (ou fixe).

8. Nacelle (1) selon la revendication 7, **caractérisée en ce que** le limiteur de déformées est disposés à l'opposé de l'interface de rattachement au mât (2).

9. Nacelle (1) selon l'une quelconque des revendications 1 à 8, **caractérisée en ce que** les moyens de guidage (15 , 16) sont associés à des moyens supplémentaires de reprise d'effort, tels que des pions de cisaillement, disposés à proximité de l'interface de la structure mobile avec le mât (2), et aptes à coopérer avec des moyens de reprise d'effort complémentaire d'un élément fixe, notamment ledit mât.

10. Nacelle (1) selon l'une quelconque des revendications 1 à 9, **caractérisée en ce que** au moins une partie des moyens de guidage (15, 16) sont contenus dans une enveloppe longitudinale de la structure médiane (5).

11. Nacelle (1) selon l'une quelconque des revendications 1 à 10, **caractérisée en ce qu'**au moins une partie des moyens de guidage présentent un débordement aval des rails (15) ou glissières (16) au niveau d'une zone d'une section arrière de la nacelle.

12. Nacelle (1) selon l'une quelconque des revendications 1 à 11, **caractérisée en ce que** la nacelle est une nacelle pour fuselage d'aéronef.

13. Nacelle (1) selon l'une quelconque des revendications 1 à 12, **caractérisée en ce que** la nacelle est destinée à être fixée à un mât (2) sensiblement horizontal.

## Patentansprüche

1. Gondel (1) für Turboreaktor, die eine Lufteingangsstruktur (4) umfasst, die geeignet ist, um einen Luftstrom zu einem Gebläse des Turboreaktors zu kanalisieren, und eine Mittenstruktur (5), die dazu bestimmt ist, das Gebläse zu umgeben und mit der die Lufteingangsstruktur derart verbunden ist, dass eine aerodynamische Kontinuität sichergestellt ist, wobei die Mittenstruktur einerseits eine Verkleidung umfasst, die dazu bestimmt ist, das Gebläse zu umgeben und, andererseits, eine externe Struktur, wobei die Lufteingangsstruktur eine externe Längsplatte (40) umfasst, die eine Lufteingangslippe (4a) integriert und sich erstrecken kann, bis sie mindestens einen Teil der externen Struktur des Mittenabschnitts und darüber hinaus integriert, wobei die externe Längsplatte in Verschiebung zwischen einer Betriebsposition, in der die externe Platte die eine aerodynamische Kontinuität der Außenseite der Gondel sicherstellt, und einer Wartungsposition, in der die externe Platte von der Außenstruktur des Mittenabschnitt beabstandet ist und die Lufteingangslippe von der internen Platte der Lufteingangsstruktur beabstandet ist, beweglich ist, **dadurch gekennzeichnet, dass** die externe Längsplatte mit nur zwei Führungsmitteln des Typs Schiene (15) / Gleitführung (16) assoziiert ist, die zu jeder Seite der Schnittstelle mit dem Anhängmast angeordnet sind, wobei die Führungsmittel des Typs Schiene (15) / Gleitführung (16) Strukturelemente sind, wobei mindestens ein Teil der Strukturführungsmittel möglichst nahe an der Schnittstelle mit dem Anhängmast (2) der Gondel positioniert sind, wobei die zwei Schienen (15) einen von dem Mast (2) auskragenden stromaufwärtigen Teil und der daher nicht direkt von diesem getragen wird, aufweist, wobei die stromaufwärtigen Enden der Schienen (15) miteinander durch einen Beschlag (38) verbunden sind, um den Abstand zwischen den zwei Schienen (15) im Bereich des stromaufwärtigen Teils aufrecht zu erhalten.

2. Gondel (1) nach Anspruch 1, **dadurch gekennzeichnet, dass** die Schnittstelle der beweglichen externen Platte mit dem Anhängmast (2) Abdichtmittel (20) umfasst.

3. Gondel (1) nach Anspruch 2, **dadurch gekennzeichnet, dass** die Abdichtmittel (20) derart angeordnet sind, dass sie eine Aussparungsschräge der Quetschung der Dichtung bei den Handhabungen des Öffnens und des Schließens der verschiebbaren Struktur (40) aufweisen.

4. Gondel (1) nach einem der Ansprüche 1 bis 3, **dadurch gekennzeichnet, dass** mindestens eine Schiene (15) im Bereich eines Teils stromaufwärts der Schiene mit einem Verstärkungschwingarm (17), der dazu bestimmt ist, mit dem Mast (2) verbunden zu werden, ausgestattet ist.

5. Gondel (1) nach einem der Ansprüche 1 bis 4, **dadurch gekennzeichnet, dass** der Abstand zwischen mindestens zwei Schienen (15) mit Hilfe mindestens eines Beschlags (33, 34), der zwischen den Schienen angeordnet und in jeder von ihnen befestigt ist, aufrechterhalten wird.

6. Gondel (1) nach einem der Ansprüche 1 bis 5, **dadurch gekennzeichnet, dass** die bewegliche Struktur mit Zentrier- (52) und Positionierungsmitteln ausgestattet ist, die geeignet sind, um mit komplementären Zentrier- und Positionierungsmitteln (51) einer stationären Struktur zusammenzuwirken.

7. Gondel (1) nach Anspruch 6, **dadurch gekennzeichnet, dass** die Zentrier- und Positionierungsmittel (50) mindestens einen Verzerrungsbegrenzer umfassen, der mindestens einen Beschlag umfasst, der auf eine stationäre Struktur (51) oder die bewegliche Struktur derart montiert ist, dass er zwischen zwei Beschläge (52) kommt, die auf der beweglichen Struktur oder der stationären Struktur montiert sind, wobei ein Raum eingerichtet wird, wenn die bewegliche Struktur in geschlossener Position zwischen dem Beschlag, der auf die stationäre (oder bewegliche) Struktur montiert ist, und den Beschlägen, die auf die bewegliche (oder stationäre) Struktur montiert sind, ist.

8. Gondel (1) nach Anspruch 7, **dadurch gekennzeichnet, dass** der Verzerrungsbegrenzer der Anschlussschnittstelle an den Mast (2) entgegengesetzt angeordnet ist.

9. Gondel (1) nach einem der Ansprüche 1 bis 8, **dadurch gekennzeichnet, dass** die Führungsmittel (15, 16) mit zusätzlichen Kraftübernahmemitteln assoziiert sind, wie zum Beispiel mit Scherstiften, die in der Nähe der Schnittstelle der beweglichen Struktur mit dem Mast (2) angeordnet und geeignet sind, um mit komplementären Kraftübernahmemitteln eines stationären Elements, insbesondere des Masts, zusammenzuwirken.

10. Gondel (1) nach einem der Ansprüche 1 bis 9, **dadurch gekennzeichnet, dass** mindestens ein Teil der Führungsmittel (15, 16) in einem Längsmantel der Mittenstruktur (5) enthalten ist.

11. Gondel (1) nach einem der Ansprüche 1 bis 10, **dadurch gekennzeichnet, dass** mindestens ein Teil der Führungsmittel ein stromabwärtiges Überstehen der Schienen (15) oder Gleitführungen (16) im Bereich einer Zone einer hinteren Sektion der Gondel aufweist.

12. Gondel (1) nach einem der Ansprüche 1 bis 11, **dadurch gekennzeichnet, dass** die Gondel eine Gondel für Luftfahrzeugrumpf ist.

13. Gondel (1) nach einem der Ansprüche 1 bis 12, **dadurch gekennzeichnet, dass** die Gondel dazu bestimmt ist, an einem Mast (2), der im Wesentlichen horizontal ist, befestigt zu sein.

## Claims

1. A nacelle (1) for turbojet engine comprising an air inlet structure (4) capable of channeling an air flow towards a fan of the turbojet engine and a mid-structure (5) intended to surround said fan and to which the air inlet structure is attached so as to ensure an aerodynamic continuity, the mid-structure comprising, on the one hand, a casing intended to surround the fan and, on the other hand, an outer structure, the air inlet structure comprising a longitudinal outer panel (40) integrating an air inlet lip (4a) and which may extend until integrating at least one portion of the outer structure of the mid-section and beyond, said longitudinal outer panel being movably mounted in translation between an operation position in which the outer panel ensures the aerodynamic continuity of the outside of the nacelle, and a maintenance position in which the outer panel is spaced from the outer structure of the mid-section and the air inlet lip is spaced from the inner panel of the air inlet structure, **characterized in that** the longitudinal outer panel is associated to only two rails (15) / slide (16) type guide means, which are disposed on either side of the interface with the hooking mast, the rails (15) / slide (16) type guide means being structural, at least one portion of said structural guide means being positioned as close as possible to an interface with a hooking mast (2) of the nacelle, the two rails (15) having a cantilevered upstream portion of the mast (2) and therefore not directly supported by the mast, the upstream ends of said rails (15) being linked therebetween by a fitting (38) so as to maintain the spacing between the two rails (15) at said upstream portion.

2. The nacelle (1) according to claim 1, **characterized in that** the interface of the movable outer panel with the hooking mast (2) comprises sealing means (20).

3. The nacelle (1) according to claim 2, **characterized in that** the sealing means (20) are disposed so as to have a slope for releasing the crushing of the gasket during the opening and closing operations of the translatable structure (40).

4. The nacelle (1) according to any one of claims 1 to 3, **characterized in that** at least one rail (15) is equipped, at an upstream portion of said rail, with a reinforcing connecting rod (17) intended to be linked to the mast (2).

5. The nacelle (1) according to any one of claims 1 to 4, **characterized in that** the spacing between at least two rails (15) is maintained by means of at least one fitting (33, 34) disposed between said rails and fastened in each thereof.

6. The nacelle (1) according to any one of claims 1 to 5, **characterized in that** the movable structure is equipped with centering and positioning means (52) capable of cooperating with complementary centering and positioning means (51) of a fixed structure.

7. The nacelle (1) according to claim 6, **characterized in that** the centering and positioning means (50) comprise at least one distortion limiter including at least one fitting mounted on a fixed structure (51) or the movable structure so as to come between two fittings (52) mounted on the movable structure or the fixed structure, a space being formed when the movable structure is in the closed position between the fitting mounted on the fixed (or movable) structure and the fittings mounted on the movable (or fixed) structure.

8. The nacelle (1) according to claim 7, **characterized in that** the distortion limiter is disposed opposite to the attachment interface to the mast (2).

9. The nacelle (1) according to any one of claims 1 to 8, **characterized in that** the guide means (15, 16) are associated to additional strain-absorbing means, such as shear pins, disposed close to the interface of the movable structure with the mast (2), and capable of cooperating with complementary strain-absorbing means of a fixed member, in particular said mast.

10. The nacelle (1) according to any one of claims 1 to 9, **characterized in that** at least one portion of the guide means (15, 16) are contained in a longitudinal envelope of the mid-structure (5).

11. The nacelle (1) according to any one of claims 1 to 10, **characterized in that** at least one portion of the guide means have a downstream overrun of the rails (15) or slides (16) at an area of a rear section of the nacelle.

12. The nacelle (1) according to any one of claims 1 to 11, **characterized in that** the nacelle is a nacelle for an aircraft fuselage.

13. The nacelle (1) according to any one of claims 1 to 12, **characterized in that** the nacelle is intended to be fastened to a substantially horizontal mast (2).
